**Europäisches Patentamt**

**European Patent Office**

**Office européen des brevets**

(11) Veröffentlichungsnummer: **0 162 508**
**B1**

# (12) EUROPÄISCHE PATENTSCHRIFT

(45) Veröffentlichungstag der Patentschrift:
**29.06.88**

(21) Anmeldenummer: **85200613.9**

(22) Anmeldetag: **19.04.85**

(51) Int. Cl.⁴: **H 01 G 4/30,** H 01 G 13/00,
B 28 B 11/08

(54) Verfahren und Vorrichtung zum Herstellen keramischer Mehrschichtkondensatoren.

(30) Priorität: **25.04.84 NL 8401320**

(43) Veröffentlichungstag der Anmeldung:
**27.11.85 Patentblatt 85/48**

(45) Bekanntmachung des Hinweises auf die Patenterteilung:
**29.06.88 Patentblatt 88/26**

(84) Benannte Vertragsstaaten:
**BE DE FR GB NL**

(56) Entgegenhaltungen:
GB-A-1 157 123
GB-A-1 510 891
US-A-3 324 212

(73) Patentinhaber: **N.V. Philips' Gloeilampenfabrieken,**
**Groenewoudseweg 1, NL- 5621 BA Eindhoven (NL)**

(72) Erfinder: **Marneffe, Antonius Christianus, p/A Int.**
**Octrooibureau B.V. Prof. Holstlaan 6, NL- 5656**
**AA Eindhoven (NL)**
Erfinder: **Persoon, Frederik Gerardus Adrianus,**
**p/A Int. Octrooibureau B.V. Prof. Holstlaan 6,**
**NL- 5656 AA Eindhoven (NL)**
Erfinder: **Scholten, Gerard Johan, p/A Int.**
**Octrooibureau B.V. Prof. Holstlaan 6, NL- 5656**
**AA Eindhoven (NL)**

(74) Vertreter: **Hartung, Edgar Erwin,**
**INTERNATIONAAL OCTROOIBUREAU B.V. Prof.**
**Holstlaan 6, NL- 5656 AA Eindhoven (NL)**

## Beschreibung

Die Erfindung bezieht sich auf ein Verfahren zum Herstellen keramischer Mehrschichtkondensatoren, wobei auf Folien aus dielektrischem keramischem Material örtlich Elektrodenschichten aus Elektrodenmaterial aufgebracht werden, die mit Elektrodenschichten versehenen Folien aufeinander gestapelt und zusammengepresst werden zu einer Platte, die daraufhin zu einzelnen Kondensatorelementen derart aufgeteilt wird, dass aufeinanderfolgende Elektrodenschichten auf einander gegenüberliegenden Stirnflächen der Kondensatorelemente frei gelegt werden, wonach die Kondensatorelemente gesintert und auf den genannten Stirnflächen mit einer elektrisch leitenden Schicht versehen werden.

Eine derartiges Verfahren ist aus der U. S. Patentschrift 3 617 834 bekannt. Bei diesem bekannten Verfahren werden gestapelte Schichten aus Elektrodenmaterial und keramischem Material zu einzelnen Kondensatorelementen durch Schneiden oder auf eine andere nicht näher beschriebene Art und Weise aufgeteilt; dabei kann an Sägen, Stanzen und dergleichen gedacht werden. Dadurch, dass das grüne keramische Material, das weich und bröckelig ist, geschnitten, gestanzt oder gesägt wird, findet Abbröcklung, Verschiebung und Ausschmieren von Material an den Schnittflächen statt mit der Folge einer Verschmutzung der freiliegenden Elektrodenschichten und einer schlechten und schwierigen Kontaktierung derselben mit der nachher aufzutragenden elektrisch leitenden Schicht. Ausserdem ist bei Anwendung der genannten Trennverfahren die Gefahr vor Delaminierung ziemlich gross.

Die Erfindung hat nun zur Aufgabe, ein Verfahren zu schaffen, das es ermöglicht, eine aus Folien aus keramischem Material aufgebaute Platte, die örtlich mit Elektrodenmaterial bedeckt sind, auf wirksame Weise und ohne Verschmutzung der Schnittflächen zu einzelnen Kondensatorelementen aufzuteilen.

Dies wird nach der Erfindung im wesentlichen dadurch erzielt, dass die Platte entsprechend Teilungslinien auf beiden Seiten gleichzeitig derart eingekerbt wird, dass längs der eingekerbten Teilungslinien durch die restliche Dicke der Platte hindurch ein spontaner Bruch entsteht.

Durch die erfindungsgemässe Massnahme wird die Platte zu einzelnen Kondenstorelementen aufgeteilt und zwar ohne Abbröcklung des Materials, ohne Materialverlust und ohne Verschmutzung der Trennflächen. Dabei wird unter Einkerben das Eindrücken bis zu einer relativ geringen Tiefe verstanden. Durch Einkerbung wird in dem weichen spröden keramischen Material eine Druckspannung aufgebaut, die beim Erreichen eines bestimmten Maximums zu einem spontanen Bruch führt mit einwandfreien Bruchflächen. Dadurch, dass auf beiden Seiten gleichzeitig eingekerbt wird, wird der Bruch ziemlich genau definiert und lokalisiert.

Dadurch, dass bei einer bevorzugten Ausführungsform des erfindungsgemässen Verfahrens die Platte auf jeder Seite maximal bis zu einer Tiefe entsprechend 10 % der Dicke der Platte eingekerbt wird, wird einerseits eine ausreichende Spannung zum Erzielen eines Bruches aufgebaut und wird andererseits die Anzahl Elektrodenschichten, die eingekerbt wird, auf ein Minimum beschränkt. In den meisten Fällen enthält eine Platte 25 bis 30 keramische Folien mit je einer Dicke von 50 µm. Die maximale Kerbtiefe entspricht dann je Seite der Dicke von 2 bis 3 Folien.

Eine andere bevorzugte Ausführungsform des erfindungsgemässen Verfahrens weist das Kennzeichen auf, dass die Platte in einen federnden Rahmen eingelegt und daraufhin auf beiden Seiten und schrittweise in einer ersten Richtung und danach in einer zweiten Richtung senkrecht zu der ersten Richtung eingekerbt wird, wonach die auf diese Weise erhaltenen Kondensatorelemente aus dem federnden Rahmen entfernt und den nachfolgenden Bearbeitungen ausgesetzt werden. Durch Einkerbung und Brechen erfährt die Platte eine Verlängerung in einer Richtung senkrecht zu den Teilungslinien; durch eine schrittweise Einkerbung erhält die Platte die Möglichkeit, sich allmählich zu dehnen ohne Gefahr von Delaminierung und ohne Beschädigung der einzelnen Kondensatorelemente. Diese Verlängerung der Platte erfolgt selbstverständlich ebenfalls beim Einkerben in der genannten zweiten Richtung. Der Abstand zwischen den aufeinanderfolgenden Teilungslinien entspricht nahezu der Abmessung der einzelnen Kondensatorelemente in den betreffenden Richtungen. Dadurch, dass die Platte beim Einkerben in einen federnden Rahmen aufgenommen ist, werden die durch Einkerbung auftretenden Verlängerungen der Platte ausgeglichen und es werden die bereits getrennten einzelnen Kondensatorelemente zusammengehalten, so dass das Kerbverfahren einwandfrei verlaufen kann.

Ein keramischer Mehrschichtkondensator, hergestellt entsprechend dem erfindungsgemässen Verfahren, kennzeichnet sich insbesondere durch eine gute Verbindung der Elektrodenschichten mit der auf den Stirnflächen angebrachten elektrisch leitenden Schicht aus.

Die Erfindung bezieht sich ebenfalls auf eine Vorrichtung zum Durchführen des Verfahrens; diese Vorrichtung ist nach der Erfindung durch einen Oberstempel und einen Unterstempel gekennzeichnet, die gegeneinander verschiebbar sind und je zwei Kerbblöcke und ein Kerbelement aufweisen, wobei die Vorrichtung weiterhin durch einen Schlitten gekennzeichnet ist, der zwischen den beiden Stempeln hindurch verschiebbar ist und als Träger für einen Rahmen dient, der eine zentrale rechtwinklige Öffnung aufweist, bei der zwei benachbarte, senkrecht aufeinander stehende Wände federnd ausgebildet sind. Mit dieser Vorrichtung kann das Verfahren auf gewünschte einwandfreie Weise durchgeführt werden. Vorzugsweise wird der Schlitten schrittweise von einem Schrittmotor angetrieben, wobei die beiden Kerbelemente synchron zu den Stillstandperioden des Schlittens zueinander bewegt werden und in einer in die Öffnung des Rahmens eingelegten keramischen Mehrschichtplatte geradlinige parallele Einkerbungen anbringen; in einer zweiten Phase wird entweder auf derselben Vorrichtung oder auf einer zweiten ähnlichen Vorrichtung in der Platte eine zweite Reihe von Einkerbungen in einer Richtung senkrecht zu der ersten Reihe vorgesehen. Die Synchronisierung der Schrittbewegung des Schlittens und der Kerbbewegung der Kerbelemente erfolgt auf an sich bekannte herkömmliche Art und Weise.

Eine bevorzugte Ausführungsform der erfindungsgemässen Vorrichtung weist das Kennzeichen auf, dass die federnden Wände des Rahmens durch je einen der zentralen Öffnung zugewandten länglichen Wandteil gebildet sind, der über einen Brückenteil mit einer durch Ausnehmungen begrenzten, als Feder wirksamen Rippe verbunden ist. Durch diese Massnahme wird eine einfache und solide Federkonstruktion des Rahmens ohne einzelne Teile erhalten.

Bei einer anderen bevorzugten Ausführungsform der erfindingsgemässen Vorrichtung weisen die Kerbelemente eine unscharfe Kerbkante mit, im Schnitt gesehen, einem Krümmungsradius von mindestens 30 μm auf. Versuche haben gezeigt, dass mit Kerbelementen, deren Kerbkante den gekennzeichneten Krümmungsradius aufweist, die gewünschten spontanen Brüche erhalten werden mit einem regelmässigen Äusseren und ohne Abbröcklung der Bruchflächen.

Ein Ausführungsbeispiel der Erfindung ist in der Zeichnung dargestellt und wird im folgenden näher beschrieben. Es zeigen

Fig. 1    einen keramischen Mehrschichtkondensator einer bekannten Bauart,

Fig. 2    einen Längsschnitt durch den Kondensator gemäss der Linie II-II in Fig. 1,

Fig. 3    einen Längsschnitt durch eine zu einzelnen Kondensatorelementen aufzuteilende Mehrlagenplatte,

Fig. 4    ein Werkzeug zum Durchführen des erfindungsgemässen Verfahrens,

Fig. 5    eine schematische Darstellung der Durchführung des erfindungsgemässen Verfahrens,

Fig. 6    einen Schnitt durch das Kerbelement in vergrössertem Maßstab,

Fig. 7    einen Längsschnitt durch eine erfindungsgemässe Vorrichtung,

Fig. 8    eine Draufsicht der Vorrichtung gemäss der Linien VIII-VIII in Fig. 7, zum Teil aufgeschnitten,

Fig. 9    einen Schnitt durch die Vorrichtung gemäss der Linie IX-IX in Fig. 7.

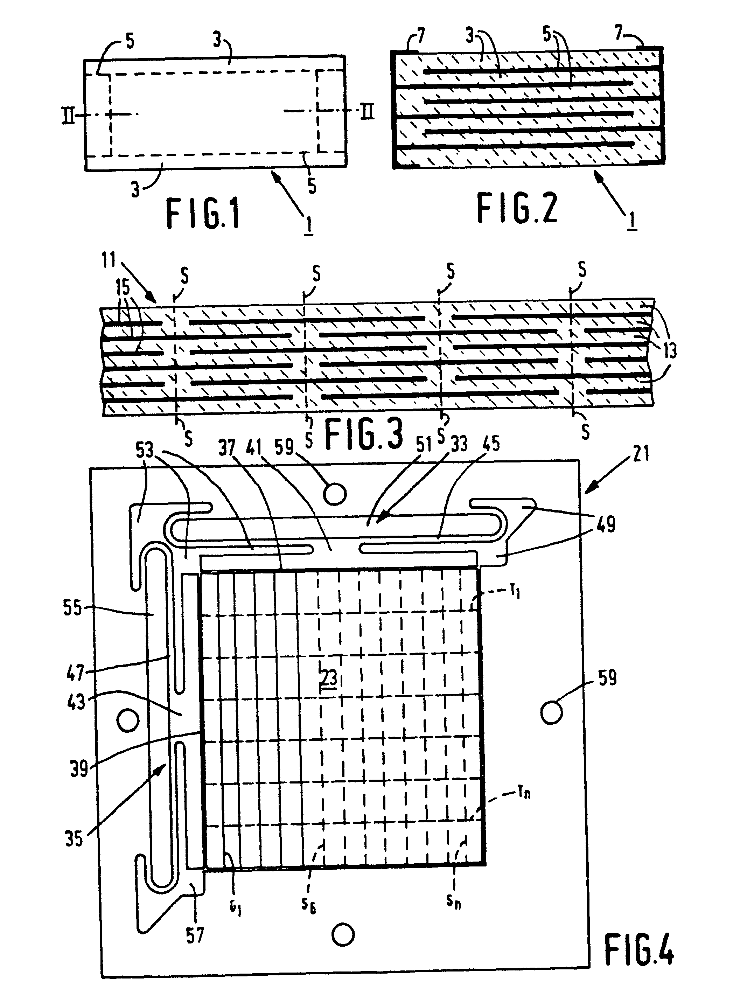

Der in den Fig. 1 und 2 dargestellte Kondensator 1 ist bekannter Bauart und besteht aus abwechselnden dielektrischen keramischen Materials 3 und Elektrodenmaterials 5; aufeinanderfolgende Elektrodenschichten 5 erstrecken sich abwechselnd bis an die eine und bis an die andere Stirnfläche des Kondensators 1; wie in Fig. 1 ersichtlich, erstrecken sich die Elektrodenschichten 5 nicht bis an die Längsseiten des Kondensators. Durch 7 ist eine elektrisch leitende Schicht auf den Stirnflächen des Kondensators bezeichnet.

Ein derartiger keramischer Mehrschichtkondensator wird auf bereits bekannte Art und Weise wie folgt erhalten; auf Folien aus dielektrischem keramischem Material werden örtlich, beispielsweise im Siebdruckverfahren, Elektrodenmaterialschichten angebracht; die mit Elektrodenschichten versehenen Folien werden aufeinander gestapelt und zu einer Platte zusammengepresst; daraufhin wird die Platte derart zu einzelnen Kondensatorelementen aufgeteilt, dass aufeinanderfolgende Elektrodenschichten auf einander gegenüberliegenden Stirnflächen der Kondensatorelemente frei liegen; danach werden die Kondensatorelemente gesintert und letzten Endes auf den Stirnflächen mit einer elektrisch leitenden Schicht versehen. Fig. 3 zeigt im Schnitt eine Platte 11, die aus aufeinander gestapelten und zusammengepressten Folien 13 aus dielektrischem keramischem Material bestehen, worauf örtlich Schichten 15 aus Elektrodenmaterial aufgebracht sind. Durch S-S sind Teilungslinien angegeben, nach denen die Platte 11 zu einzelnenen Kondensatorelementen aufgeteilt werden muss.

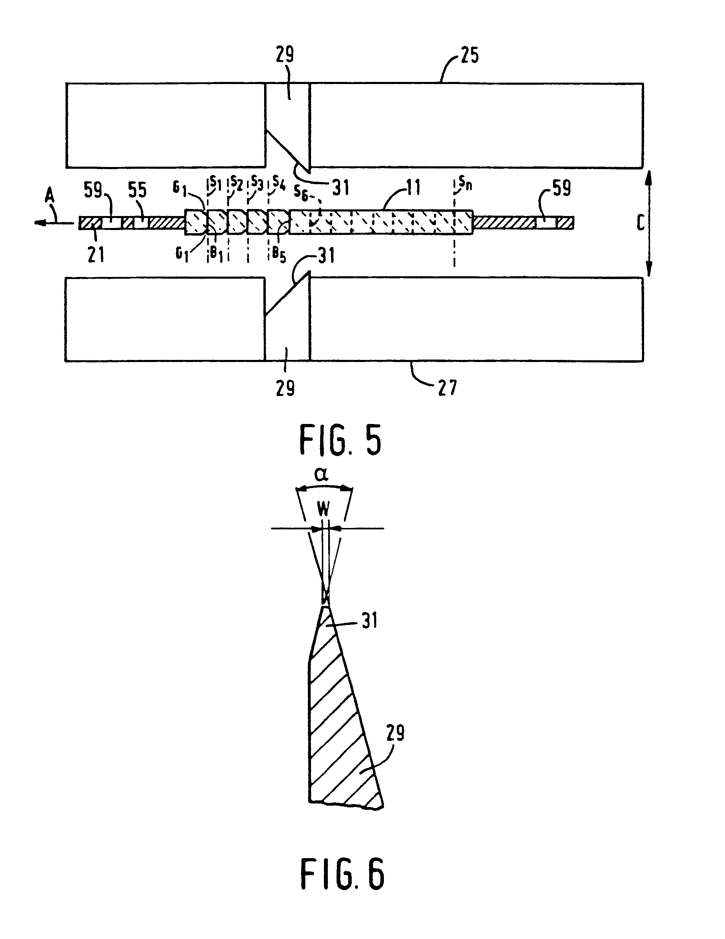

Die Erfindung bezieht sich insbesondere auf ein Verfahren zum Aufteilen der Platte 11 zu einzelnen Kondensatorelementen; das Verfahren wird anhand der Fig. 4 und 5 näher erläutert.

Die Fig. 4 und 5 zeigen eine aufzuteilende Platte 11, die in einem federnden Rahmen 21 angeordnet ist, der dazu mit einer zentralen rechtwinkligen Öffnung 23 versehen ist, die dem Umfang der Platte 11 nahezu entspricht. Der Rahmen 21 ist in Richtung des Pfeiles A schrittweise verschiebbar. Durch 25 und 27 sind zwei Stempel bezeichnet, die in Richtung des Doppelpfeiles C gegeneinander zyklisch verschiebbar sind. Jeder Stempel ist mit einem länglichen Kerbelement 29 mit einer Kerbkante 31 versehen. Zum Aufteilen der Platte 11 wird der Rahmen 21 derart positioniert, dass die Teilungslinie S1 mit den Kerbkanten 31 der Kerbelemente 29 in einer vertikalen Ebene zu liegen kommt. Daraufhin werden die beiden Stempel 25 und 27 mit einer derartigen Hublänge zueinander bewegt, dass durch die beiden Kerbkanten 31 gleichzeitig auf beiden Seiten der Platte 11 eine Einkerbung G gebildet wird. Der Hub der beiden Stempel 25 und 27 ist derart eingestellt, dass die Platte auf jeder Seite etwa bis zu einer Tiefe von 10 % der Gesamtdicke der Platte 11 eingekerbt wird. Durch die Einkerbung wird in dem weichen keramischen Material eine Druckspannung aufgebaut, die beim Erreichen eines bestimmten Maximums zu einem spontanen Bruch B führt; dadurch, dass gleichzeitig auf beiden Seiten der Platte 11 eine Einkerbung G angebracht wird, wird der Bruch B ziemlich genau lokalisiert. Es dürfte einleuchten, dass die Länge der Kerbkanten 31 der Abmessung der Platte 11 entsprechend den Teilungslinien S nahezu entspricht. Nachdem die beiden Stempel 25 und 27 wieder in ihre Ausgangslage zurückgekehrt sind, wird der Rahmen um einen Schritt weiter in der Richtung des Pfeiles A derart verschoben, dass die Teilungslinie S2 in der vertikalen Ebene der Kerbkanten 31 zu biegen kommt. Nachdem die alle Einkerbungen entsprechend den Teilungslinien S1 bis Sn angebracht sind, wird die Platte 11 entsprechend den Teilungslinien T1 bis Tn in einer Richtung quer zu den ersten Einkerbungen eingekerbt.

Der Rahmen 21 ist mit zwei federnden Wänden 33 und 35 versehen, die nebeneinander liegend, senkrecht aufeinander stehen. Diese federnden Wände werden durch je einen der zentralen Öffnung 23 zugewandten länglichen Wandteil 37 bzw. 39 gebildet, der über einen zentralen Brückenteil 41 bzw. 43 mit einer als Feder wirksamen Rippe 45 bzw. 47 verbunden ist; die Rippen 45 und 47 sind gebildet und werden begrenzt durch Ausnehmungen 49, 51, 53, 55 und 57. Durch die federnde Wirkung der Wände 33 und 35 werden Verlängerungen der Platte 11, die durch aufeinanderfolgende Einkerbungen in einer Richtung senkrecht zu den Teilungslinien auftreten, ausgeglichen; ausserdem halten die federnden Wände die einzelnen Kondensatorelemente, die durch spontan hervorgerufene Brüche bereits voneinander getrennt sind, mosaikartig derart zusammen, dass die Platte 11 in ihrer Gesamtheit und ohne Störungen aufgeteilt werden kann. Durch 59 sind Bezugslöcher bezeichnet, die in dem Rahmen vorgesehen sind.

Fig. 6 zeigt das Kerbelement 29 in vergrössertem Maßstab. Die Praxis hat gezeigt, dass eine einwandfreie Kerbwirkung erhalten wird, wenn der Krümmungsradius der Kerbkante 31 mindestens 30 µm beträgt. Eine derartige Kante kann als unscharf betrachtet werden, wenn die Tatsache berücksichtigt wird, dass die einzelnen keramischen Schichten eine Dicke von etwa 50 µm aufweisen und dass die Einkerbungen eine Tiefe von 100 bis 200 µm haben. In dem dargestellten Ausführungsbeispiel hat die Kerbkante 31 einen Winkel von etwa 30°.

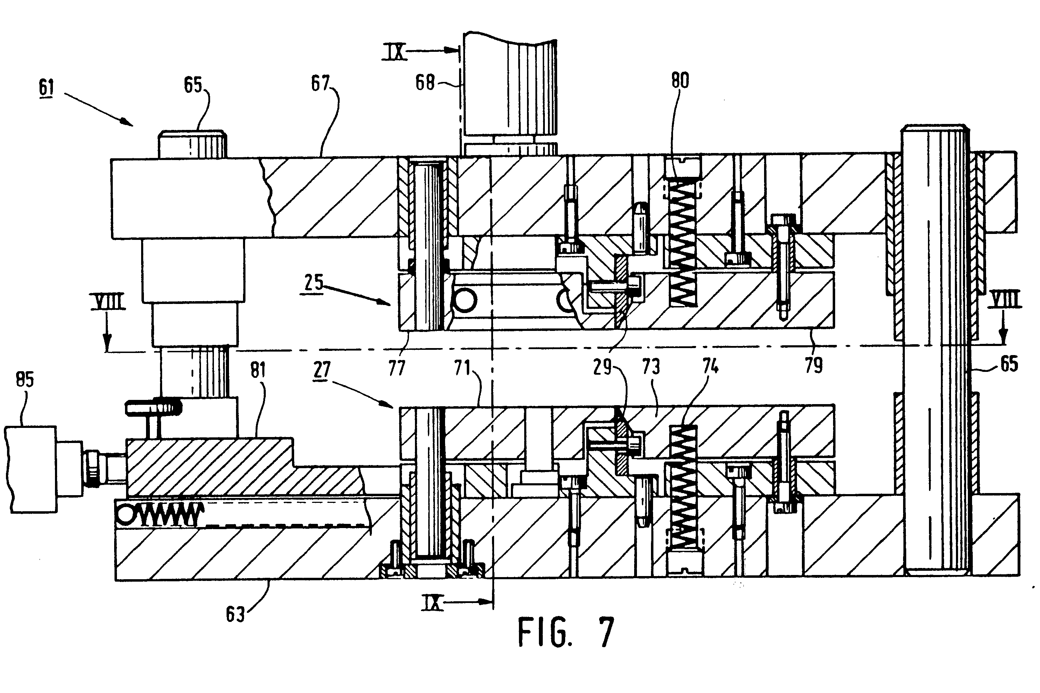

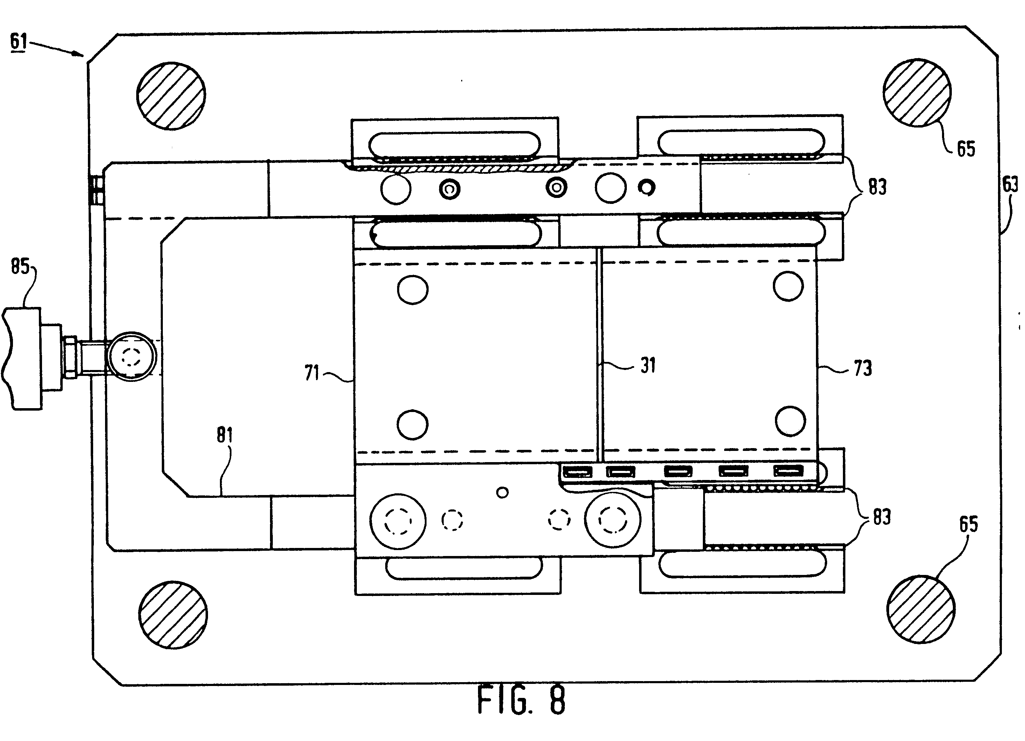

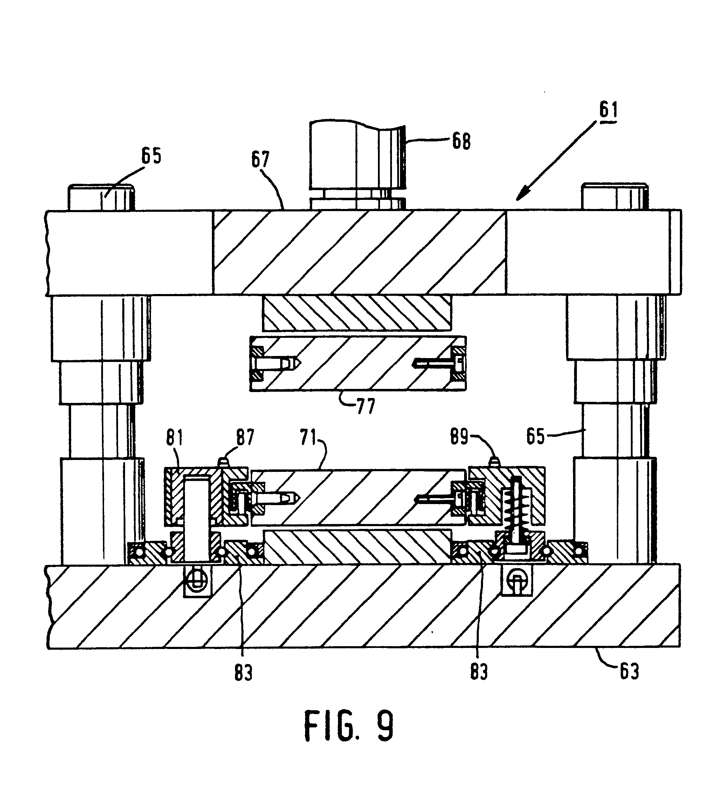

Die Fig. 7, 8 und 9 zeigen im Längsschnitt bzw. in Draufsicht und im Querschnitt eine erfindungsgemässe Vorrichtung zum Durchführen des bereits beschriebenen Verfahrens. Die Vorrichtung 61 weist eine Bodenplatte 63 auf, die auf einem weiterhin nicht dargestellten Rahmen bzw. Tisch angeornet ist. In der Bodenpatte 63 sind vier Führungsstangen 65 befestigt, auf denen eine Schiebeplatte 67 verschiebbar gelagert ist. Durch eine hydraulische, pneumatische oder ähnliche Einheit 68 kann die Schiebeplatte 67 in Richtung der Bodenplatte 63 verschoben und in die Ausgangslage zurückgeführt werden. Auf der Bodenplatten 63 ist der Unterstempel 27 angeordnet, der aus zwei Kerbblöcken 71 und 73 besteht, die gegenüber der Bodenplatte 63 einen durch dieselbe beschränkten Hub entgegen der Wirkung einer Feder 74 durchführen können. Die beiden Kerbblöcke 71 und 73 umschliessen das bereits genannte Kerbelement 29, das mit der Bodenplatte 63 fest verbunden ist. Auf ähnliche Weise ist die Schiebeplatte 67 mit dem Oberstempel 25 versehen, der ebenfalls aus zwei Kerbblöcken 77 und 79 besteht, die auf ähnliche Weise gegenüber der Schiebeplatte 67 einen begrenzten Hub entgegen der Wirkung einer Feder 80 durchführen können. Die beiden Kerbblöcke 77 und 79 umschliessen ebenfalls ein Kerbelement 29, das mit der Schiebeplatte 67 starr verbunden ist. Durch 81 ist ein Schlitten bezeichnet, der U-förmig ausgebildet ist. Der Schlitten 81 ist durch Kugellager 83 auf der Bodenplatte 63 verschiebbar gelagert und kann ebenfalls, zusammen mit den Kerbblöcken 71 und 73 einen begrenzten Hub ausführen. Durch einen Antrieb 85, vorzugsweise einen Schrittmotor, kann der Schlitten 81 schrittweise zwischen die Kerbblöcke 71, 73 und 77, 79 hindurch verschoben werden. Durch 87 und 89 sind Bezugsstifte bezeichnet, die auf dem Schlitten 81 angeordnet sind.

Zum Durchführen des bereits beschriebenen Verfahrens mit der betreffenden Vorrichtung wird der Rahmen 21 mit einer aufzuteilenden Platte 11 auf den Schlitten 81 gelegt und durch die Bezugslöcher 59, die mit den Bezugsstiften 87 und 89 zusammenarbeiten, derart positioniert, dass eine der federnden Wände 33, 35 des Rahmens 21, in Transportrichtung gesehen, vorne liegt. Daraufhin wird der Schlitten 81 in die Ausgangslage gebracht und zwar derart, dass die erste Teilungslinie S1, wie bereits erwähnt, mit den Kerbkanten 31 der Kerbelemente 29 senkrecht fluchtend zu liegen kommt. Danach wird die Schiebeplatte 67 heruntergefahren, bis die Kerbblöcke 77 und 79 des Oberstempels 25 die aufzuteilende Platte 11 berühren; die Platte 11 ist nun zwischen den Kerbblöcken 71 und 73 des Unterstempels 27 einerseits und den Kerbblöcken 77 und 79 des Oberstempels 25 andererseits festgeklemmt.

Anschliessend führen die Kerbblöcke 71 und 73 des Unterstempels 27, der Schlitten 81 und der Rahmen 21 mit der Platte 11 einen kurzen abwärts gerichteten Hub aus, zusammen mit der Schiebeplatte 67 und den Kerbblöcken 77 und 79 des Oberstempels 25. Während dieses Bewegungsablaufs der genannten Elemente findet eine Relativverschiebung der Kerbblöcke 71 und 73 in bezug auf die Grundplatte 63 sowie der Kerbblöcke 77 und 79 in bezug auf die Schiebeplatte 67 statt; hierdurch kommen die Kerbkanten 31 der Kerbelemente 29 frei zu liegen, dringen in die Platte 11 ein und bewirken auf den beiden Seiten der Platte 11 eine geradlinige Einkerbung mit einer Tiefe entsprechend dem genannten kurzen Hub der Kerbblöcke, mit der Folge eines spontanen Bruches durch die Dicke der Platte 11. Die Schiebeplatte 67 wird wieder aufwärts bewegt und die Kerbblöcke 77, 79 bzw. 71, 73 kehren in ihre Ausgangslage zurück, letztere mit dem Schlitten 81 und dem Rahmen 21. Der Schlitten 81 wird nun um einen Schritt weiter verschoben und zwar über einen Abstand entsprechend der betreffenden Abmessung der abzutrennenden Kondensatorelemente. Daraufhin wird wieder auf beiden Seiten der Platte 11 eine Einkerbung angebracht und zwar entsprechend der Teilungslinie S2.

Nachdem alle Einkerbungen entsprechend den Teilungslinien S1 bis Sn angebracht sind, werden in einem weiteren Verfahrensschritt auf ähnliche Weise Einkerbungen entsprechend den Teilungslinien T1 bis Tn in einer Richtung senkrecht zu den ersten Einkerbungen angebracht. Dieser zweite Verfahrensschritt kann auch auf derselben Vorrichtung durchgeführt werden, wobei der Rahmen 21 um einen Winkel von 90° gedreht wird. Der Rahmen 21 kann zusammen mit der bereits eingekerbten Platte 11, die durch die federnden Wände 33 und 35 zusammengehalten wird, dem Schlitten 81 entnommen, um einen Viertelhub gedreht und wieder auf dem Schlitten 81 angeordnet werden, ohne dass die bereits eingekerbte und zu Streifen aufgeteilte Platte 11 auseinander fällt. Auch kann der Rahmen 21 mit der eingekerbten Platte 11 in einer Richtung senkrecht zu der ersten Transportrichtung durch eine zweite ähnliche Vorrichtung geführt werden und zwar derart, dass der Rahmen 21 mit der anderen federnden Wand, in der Transportrichtung gesehen, vorne liegt.

Nachdem alle Einkerbungen abgebracht sind, wird die Platte 11 dem Rahmen 21 entnommen; dadurch fällt die Platte 11 in einzelne durch Einkerben gebildete Kondensatorelemente auseinander. Daraufhin werden die Kondensatorelemente nachfolgenden notwendigen bekannten Bearbeitungen ausgesetzt, wie Sintern, Kopfversilbern, d. h. das Anbringen einer elektrisch leitenden Schicht auf den Stirnflächen und letzten Endes Durchmessen.

Es dürfte einleuchten, dass die Erfindung bei all dejenigen Verfahren zum Herstellen keramischer Bauelemente bei denen das grüne keramische Material noch vor dem Sintern zu einzelnen Elementen aufgeteilt wird, angewandt werden kann.

**Patentansprüche**

1. Verfahren zum Herstellen keramischer Mehrschichtkondensatoren, wobei auf Folien aus dielektrischem keramischem Material örtlich Elektrodenschichten aus Elektrodenmaterial aufgebracht werden, die mit Elektrodenschichten versehenen Folien aufeinander gestapelt und zusammengepresst werden zu einer Platte, die daraufhin zu einzelnen Kondensatorelementen derart aufgeteilt wird, dass aufeinanderfolgende Elektrodenschichten auf einander gegenüberliegenden Stirnflächen der Kondensatorelemente frei gelegt werden, wonach die Kondensatorelemente gesintert und auf den genannten Stirnflächen mit einer elektrisch leitenden Schicht versehen werden, dadurch gekennzeichnet, dass die Platte zu einzelnen Kondensatorelementen dadurch aufgeteilt wird, dass sie entsprechend Teilungslinien auf beiden Seiten gleichzeitig derart eingekerbt wird, dass längs der eingekerbten Teilungslinien durch die restliche Dicke der Platte hindurch ein spontaner Bruch entsteht.

2. Verfahren nach Anspruch 1, dadurch gekennzeichnet, dass die Platte auf jeder Seite maximal bis zu einer Tiefe entsprechend 10 % der Dicke der Platte eingekerbt wird.

3. Verfahren nach Anspruch 1 oder 2, dadurch gekennzeichnet, dass die Platte in einen federnden Rahmen eingelegt und daraufhin auf beiden Seiten und schrittweise in einer ersten Richtung und danach in einer zweiten Richtung senkrecht zu der ersten Richtung eingekerbt wird, wonach die auf diese Weise erhaltenen Kondensatorelemente aus dem federnden Rahmen entfernt und den nachfolgenden Bearbeitungen ausgesetzt werden.

4. Vorrichtung zum Durchführen des Verfahrens nach Anspruch 1, 2 oder 3, gekennzeichnet durch einen Oberstempel (25) und einen Unterstempel (27), die gegeneinander verschiebbar sind und die je zwei Kerbblöcke (71, 73, 77, 79) und ein Kerbelement (29) aufweisen, wobei die Vorrichtung weiterhin durch einen Schlitten (81) gekennzeichnet ist, der zwischen den beiden Stempeln hindurch verschiebbar ist und als Träger für einen Rahmen (21) dient, der eine zentrale rechtwinklige Öffnung (23) aufweist, bei der zwei benachbarte, senkrecht aufeinander stehende Wände (33, 35) federnd ausgebildet sind.

5. Vorrichtung nach Anspruch 4, dadurch gekennzeichnet, dass die federnden Wände des Rahmens durch je einen der zentralen Öffnung zugewandten länglichen Wandteil gebildet sind, der über einen Brückenteil (41, 43) mit einer durch Ausnehmungen begrenzten, als Feder wirksamen Rippe (47) verbunden ist.

6. Vorrichtung nach Anspruch 4 oder 5, dadurch gekennzeichnet, dass die Kerbelemente eine unscharfe Kerbkante (31) aufweisen mit, im Schnitt gesehen, einem Krümmungsradius von mindestens 30 μm.

## Claims

1. A method of manufacturing ceramic multilayer capacitors, in which electrode layers of electrode material are locally applied to foils of dielectric ceramic material, the foils provided with electrode layers are stacked and compressed to form a plate, which is then subdivided into individual capacitor elements in such a manner that successive electrode layers on opposite end faces of the capacitor elements are exposed, and subsequently the capacitor elements are sintered and are provided on the said end faces with an electrically conducting layer, characterized in that the plate is subdivided into individual capacitor elements in that it is notched on both sides simultaneously along division lines in such a manner that a spontaneous rupture occurs along the notched division lines through the remaining thickness of the plate.

2. A method as claimed in Claim 1, characterized in that the plate is notched on each side at most to a depth corresponding to 10 % of the thickness of the plate.

3. A method as claimed in Claim 1 or 2, characterized in that the plate is arranged in a resilient frame and is then notched on both sides and stepwise in a first direction and subsequently in a second direction at right angles to the first direction, after which the capacitor elements thus obtained are removed from the resilient frame and are subjected to the following operations.

4. An apparatus for carrying out the method claimed in Claim 1, 2 or 3, characterized by an upper die (25) and a lower die (27), which are relatively displaceable and each have two notching blocks (71, 73, 77,79) and a notching member (29), the apparatus further being characterized by a carriage (81), which is displaceable between the two dies and serves as a carrier for a frame (21), which has a central rectangular opening (23), of which two adjacent orthogonal walls (33, 35) are of resilient construction.

5. An apparatus as claimed in Claim 4, characterized in that the resilient walls of the frame are each constituted by an elongate wall portion, which faces the central opening and is connected through a bridge portion (41, 43) to a rib bounded by recesses and acting as a spring.

6. An apparatus as claimed in Claim 4 or 5, characterized in that the notching members have a blunt notching edge (31) having in sectional view a radius of curvature of at least 30 μm.

## Revendications

1. Procédé de fabrication de condensateurs céramiques à plusieurs couches, consistant à réaliser localement sur des feuilles en matériau céramique diélectrique des couches d'électrode en matériau d'électrode, à empiler et à comprimer les feuilles munies de couches d'électrode de façon à former une plaque qui, ensuite, est divisée en éléments de condensateur individuels de telle manière que des couches d'électrode successives soient mises à nu sur des surfaces transversales opposées des éléments de condensateur, après quoi les éléments de condensateur sont frittés et sont munis sur lesdites faces transversales d'une couche conductrice de l'électricité, caractérisé en ce que la plaque est entaillée simultanément sur ses deux faces suivant des lignes de division, et cela de telle manière que, suivant les lignes de division formées par entaillage, se produise une cassure spontanée traversant l'épaisseur restante de la plaque.

2. Procédé selon la revendication 1, caractérisé en ce que, la plaque est entaillée sur chaque face jusqu'à une profondeur maximale égale à 10 % de l'épaisseur de la plaque.

3. Procédé selon la revendication 1 ou 2, caractérisé en ce que la plaque est disposée dans un cadre élastique et en ce qu'ensuite, sur ses deux faces et pas à pas, elle est entaillée dans une première direction et, ensuite, dans une seconde direction perpendiculaire à la première, après quoi les éléments de condensateur ainsi obtenus sont enlevés du cadre élastique et sont soumis aux opérations ultérieures.

4. Dispositif de mise en oeuvre du procédé selon la revendication 1, 2 ou 3, caractérisé par une estampe supérieure (25) et une estampe inférieure (27) pouvant être déplacées l'une par rapport à l'autre et présentant chacune deux blocs d'entaillage (71, 73, 77, 79) et un élément d'entaillage (29) dispositif qui est encore caractérisé par un chariot (81) pouvant être déplacé entre les deux estampes et servant de support à un cadre (21) présentant une ouverture rectangulaire centrale (23) et dont deux parois voisines (33, 35) perpendiculaires l'une à l'autre sont élastiques.

5. Dispositif selon la revendication 4, caractérisé en ce que les parois élastiques du cadre sont constituées chacune par une partie de paroi allongée située vis-à-vis de l'ouverture centrale et réunie par une entretoise (41, 43) à une nervure (47) faisant fonction de ressort et limitée par des évidements.

6. Dispositif selon la revendication 4 ou 5, caractérisé en ce que les éléments d'entaillage présentent un taillant émoussé (31) qui, vu en coupe, a un rayon de courbure d'au moins 30 μm.

FIG.1

FIG.2

FIG.3

FIG.4

FIG. 5

FIG. 6

FIG. 7

FIG. 8

0 162 508

FIG. 9